Europäisches Patentamt

European Patent Office

Office européen des brevets

(19)

(11) EP 0 830 933 B1

(12) FASCICULE DE BREVET EUROPEEN

(45) Date de publication et mention
de la délivrance du brevet:
27.03.2002 Bulletin 2002/13

(51) Int Cl.⁷: **B29D 24/00**, C08J 5/24

(21) Numéro de dépôt: 97402174.3

(22) Date de dépôt: 19.09.1997

(54) **Procédé de fabrication d'une âme de panneau composite**

Verfahren zur Herstellung eines Kerns einer Verbundplatte

Method of fabrication of a core for a composite plate

(84) Etats contractants désignés:
**AT BE CH DE DK ES FI FR GB GR IE IT LI LU NL PT SE**

(30) Priorité: 24.09.1996 FR 9611586

(43) Date de publication de la demande:
25.03.1998 Bulletin 1998/13

(73) Titulaire: **SOLLAC**
**92800 Puteaux (FR)**

(72) Inventeurs:
• **Brun, Olivier**
**93120 La Courneuve (FR)**
• **Bonnebat, Claude**
**77340 Pontault Combault (FR)**

(74) Mandataire: **Browaeys, Jean-Philippe**
**USINOR,**
**Direction de la Propriété Industrielle,**
**Immeuble "La Pacific" - TSA 10001**
**92070 La Défense Cedex (FR)**

(56) Documents cités:
**EP-A- 0 251 267**        **EP-A- 0 436 419**
**WO-A-92/13907**        **FR-A- 2 544 322**
**US-A- 3 577 493**

• **PATENT ABSTRACTS OF JAPAN vol. 014, no. 299 (C-0733), 27 juin 1990 & JP 02 097536 A (IKEDA BUSSAN CO LTD), 10 avril 1990,**
• **DATABASE WPI Section Ch, Week 7846 Derwent Publications Ltd., London, GB; Class A25, AN 78-82696A XP002032448 & JP 53 115 100 A (MATSUSHITA ELEC IND CO LTD) , 7 octobre 1978**
• **PATENT ABSTRACTS OF JAPAN vol. 016, no. 106 (C-0919), 16 mars 1992 & JP 03 281590 A (DAINICHISEIKA COLOR & CHEM MFG CO LTD;OTHERS: 01), 12 décembre 1991,**

## Description

L'invention concerne des âmes de panneaux sandwich, plus particulièrement des nappes souples destinées à la réalisation de ces âmes.

Le brevet EP 0 436 419 décrit des âmes destinées à la fabrication de panneaux composites, notamment pour bâtiment.

De tels panneaux comportent par exemple deux parements plans en tôle d'acier, collés de part et d'autre d'une âme : il s'agit donc ici de panneaux sandwich.

L'âme est formée d'une nappe imprégnée de résine et présente des motifs en relief se présentant généralement sous forme d'alvéoles s'étendant perpendiculairement au plan général de l'âme : il s'agit donc d'une âme tridimensionnelle.

Les alvéoles forment par exemple un réseau de cupules tronconiques.

La hauteur des alvéoles détermine la distance entre les parements, c'est à dire l'épaisseur des panneaux.

On prépare généralement ces types d'âme à partir d'au moins une bande souple, notamment d'étoffe textile, et d'un mélange thermodurcissable non réticulé dit mélange d'imprégnation.

On imprègne la bande souple de ce mélange à l'état non réticulé et on obtient alors une nappe imprégnée, qui conserve un caractère souple.

On appelle "charge d'imprégnation" la quantité de mélange d'imprégnation retenue sur la bande par unité de surface de bande.

On peut imprégner la bande par voie humide ou par voie dite sèche.

Pour l'imprégnation par voie humide, on dissous la composition d'imprégnation dans un solvant et on trempe ensuite la bande à imprégner.

Les solvants utilisés nécessitent l'utilisation d'installations coûteuses (notamment : matériels anti-déflagrants, traitement des composés volatils).

Par ailleurs, l'imprégnation par trempage ne permet pas d'atteindre des charges d'imprégnation élevées (du moins en une seule opération) ou des charges d'imprégnation différenciées (par exemple, imprégner une face plus que l'autre, ou imprégner davantage les bords de bande par rapport au centre).

Pour éviter ces inconvénients, on préfère imprégner sans solvant, c'est à dire par voie sèche.

Pour l'imprégnation par voie sèche, on peut procéder par poudrage de la composition d'imprégnation sur la bande : on peut ainsi "doser", zone par zone, la charge d'imprégnation.

Mais une nappe imprégnée par poudrage risque de perdre sa charge initiale d'imprégnation lorsqu'on la manipule sans précautions ou si on la stocke longtemps et sans précautions.

Ainsi, on imprègne en général par poudrage lorsque l'on peut fabriquer l'âme en ligne, sans stockage intermédiaire.

Pour l'imprégnation par voie sèche, on peut également appliquer sur la bande à imprégner des films plastiques composés de mélanges thermodurcissables non encore réticulés.

Mais ces films plastiques sont coûteux.

Pour préparer des âmes de panneaux composites, il s'est révélé très pratique de disposer directement de nappes préimprégnées afin de n'avoir à mettre en oeuvre que l'opération de cuisson-moulage pour préparer des âmes.

Cette organisation de la production industrielle des âmes de panneaux suppose de pouvoir préparer à l'avance des nappes imprégnées de résine et de pouvoir les stocker plusieurs semaines ou plusieurs mois.

Mais les résines ou mélanges thermodurcissables d'imprégnation des nappes ont tendance à réticuler très lentement (et de manière incomplète) à température ambiante, de sorte qu'après une période de stockage prolongé, les nappes ne sont plus utilisables pour préparer des âmes de panneaux.

On stocke alors au froid les nappes préimprégnées, ce qui est très onéreux.

Pour éviter cet inconvénient, on choisit des mélanges d'imprégnation de prépolymères « bloqués », par exemple des mélanges polyuréthannes bloqués tels que décrits dans les documents FR 2 544 322, US 3 577 493, EP 251 267 ou JP 02 097536 A.

Pour fabriquer ensuite l'âme à partir de la nappe imprégnée ou préimprégnée, on cuit et on moule la nappe pour réticuler le mélange imprégné dans la nappe et pour lui donner la forme rigide qui convient pour servir d'âme au panneau composite, à savoir en particulier former des alvéoles suffisamment rigides dans le domaine de températures d'utilisation prévues du panneau.

On peut aisément former les alvéoles grâce à la souplesse initiale de la bande, notamment d'étoffe textile, et/ou au caractère déformable de la nappe imprégnée.

Dans ce domaine de températures d'utilisation, la rigidité de l'âme dépend, entre autres, de la charge d'imprégnation de la nappe.

Les conditions de cuisson sont adaptées pour obtenir une réticulation quasiment complète du mélange d'imprégnation pendant que la nappe est maintenue dans le moule, de manière à ce que, après démoulage, l'âme obtenue conserve la forme et les dimensions souhaitées (stabilité dimensionnelle) et présente, dans le domaine de températures d'utilisation, une rigidité suffisante pour permettre de fabriquer des panneaux composites stables et résistants.

On pratique donc en général la cuisson de la nappe imprégnée dans le moule.

La durée nécessaire de cuisson dépend du temps nécessaire pour obtenir une réticulation complète.

La durée de cuisson fixe donc le temps d'utilisation du moule et limite en pratique la productivité de l'installation de moulage.

L'invention a pour but d'améliorer la productivité de fabrication d'âmes pour panneaux composites.

A cet effet, l'invention a pour objet un procédé de fabrication d'une âme de panneau composite dans lequel :

- on prépare une nappe souple par imprégnation d'au moins une bande souple, notamment d'étoffe textile, par un mélange d'imprégnation,
- et on donne ensuite à ladite nappe la forme rigide qui convient pour servir d'âme audit panneau composite,

caractérisé en ce que ledit mélange d'imprégnation est choisi :

- parmi des mélanges thermodurcissables non réticulés susceptibles de passer à l'état liquide et/ou visqueux au delà d'une température dite de fusion $T_f$ supérieure à la température ambiante et de réticuler de manière quasiment complète au delà d'une température dite de déblocage de réticulation $T_d$ supérieure d'au moins 30°C à $T_f$,

lesdits mélanges thermodurcissables présentant, après réticulation quasiment complète à une température de cuisson $T_c$ supérieure à $T_d$ :

- d'une part, une température de transition vitreuse $T_g$ inférieure à $T_c$,
- et, d'autre part, au dessus de cette température $T_g$, une valeur de module d'Young inférieure d'au moins un facteur 200 par rapport à la valeur du module d'Young du même mélange réticulé mesurée en dessous de cette température $T_g$,

et caractérisé en ce qu'on met en forme et on rigidifie ladite nappe souple selon les étapes suivantes :

- on cuit ladite nappe dans des conditions adaptées pour obtenir une réticulation quasiment complète dudit mélange d'imprégnation à une température de cuisson $T_c$ supérieure à $T_d$,
- et on moule ensuite ladite nappe cuite au contact de moyens de moulage portés à une température de moulage $T_m$ inférieure à $T_g$ , ladite nappe étant à une température supérieure à $T_g$ lorsqu'elle rentre au contact desdits moyens de moulage.

L'invention peut également présenter une ou plusieurs des caractéristiques suivantes :

- ledit mélange d'imprégnation est choisi parmi des mélanges thermodurcissables présentant, après réticulation quasiment complète à une température de cuisson $T_c$ supérieure à $T_d$, une masse moléculaire moyenne $M_n$ et une fonctionnalité f telles que le rapport $M_n/(f-1)$ est au moins égal à 600 g/mole.
- on imprègne ladite bande souple par extrusion dudit mélange d'imprégnation porté à l'état liquide et/ou visqueux à une température dite d'imprégnation $T_i$ comprise entre $T_f$ et $T_d$.
- ledit mélange d'imprégnation comprend au moins un polyol d'une part et au moins un isocyanate bloqué comme durcisseur d'autre part, de manière à former un polymère de type polyuréthanne après réticulation et de préférence :

  - l'au moins un polyol présente un nombre moyen de radicaux hydroxylés -OH par molécule $F_{ol.moy.}$ inférieur ou égal à 6,
  - l'au moins un isocyanate bloqué présente un nombre moyen de radicaux -NCO par molécule $F_{iso.moy.}$ inférieur ou égal à 6,
  - et l'au moins un polyol et l'au moins un isocyanate bloqué sont choisis de manière à ce que $(F_{ol.moy.} + F_{iso.moy.})/2 \leq 4$.

- les étapes de cuisson et de mise en forme sont mises en oeuvre en continu pour former une âme en forme de bande continue.

L'invention peut être mise en oeuvre à l'aide d'une installation comprenant des moyens de cuisson, des moyens de moulage et des moyens pour faire défiler ladite nappe successivement dans lesdits moyens de cuisson puis dans lesdits moyens de moulage.

De préférence, lesdits moyens de moulage comprennent deux cylindres superposés dont la surface présente des motifs de moulage en relief et qui sont adaptés pour imprimer lesdits motifs sur une nappe défilant entre lesdits cylindres.

L'invention a également pour objet un procédé de fabrication de panneau composite comprenant les étapes suivantes :

- on prépare une âme en forme de bande continue en procédant selon l'invention en continu pour les étapes de cuisson et de moulage,
- on colle en continu au moins un parement en forme de bande, notamment une bande d'acier, sur au moins une face de ladite âme,
- et on découpe l'assemblage ainsi réalisé, formant un panneau, aux dimensions requises pour l'utilisation dudit panneau.

L'invention sera mieux comprise à la lecture de la description qui va suivre, donnée à titre d'exemple non limitatif.

L'installation de préparation d'une nappe préimprégnée comporte d'une manière classique des moyens pour imprégner de résine une bande souple, notamment une bande d'étoffe textile.

Comme moyen d'imprégnation connu, on peut utiliser par exemple des moyens de poudrage (cas où le mélange d'imprégnation est à l'état solide à la température d'imprégnation), des moyens d'enduction ou des moyens d'immersion (cas par exemple où le mélange d'imprégnation se présente en solution).

Dans le cas particulier de la préparation de nappes stratifiées, c'est à dire comportant plusieurs bandes souples superposées, l'installation comporte également des moyens pour appliquer et assembler les différentes bandes d'une nappe les unes sur les autres.

A cet effet, l'installation comporte par exemple des moyens de calandrage, adaptés pour appliquer et assembler les bandes les unes contre les autres tout en contribuant à améliorer l'imprégnation globale de la nappe.

Ces moyens d'imprégnation, et, le cas échéant, les moyens de calandrage sont connus en eux-mêmes et ne seront pas décrits ici en détail.

A titre d'exemple non limitatif, on va maintenant décrire le procédé de préparation d'une nappe préimprégnée stratifiée comportant deux bandes textiles superposées.

Selon l'invention, on choisit, comme mélange d'imprégnation, un mélange thermodurcissable non réticulé susceptible de passer à l'état liquide et/ou visqueux au delà d'une température dite de fusion $T_f$ supérieure à la température ambiante et de réticuler de manière quasiment complète au delà d'une température dite de déblocage de réticulation $T_d$ supérieure à $T_f$ et pour lequel la différence ($T_d - T_f$) est supérieure à 30°C.

Selon l'invention, lesdits mélanges thermodurcissables présentent en outre, après réticulation quasiment complète à une température de cuisson $T_c$ supérieure à $T_d$:

- une température de transition vitreuse $T_g$ inférieure à $T_c$,
- et une valeur de module d'Young, mesurée au dessus de cette température $T_g$, inférieure au moins d'un facteur 200 par rapport à la valeur du module d'Young du même mélange réticulé mesurée en dessous de cette température $T_g$.

Bien entendu, pour satisfaire le « cahier des charges » utilisateur du panneau composite, il importe que $T_g$ soit supérieur aux températures maximales d'utilisation du panneau, de telle sorte que l'âme du panneau reste bien rigide dans le domaine de températures d'utilisation du panneau ; ainsi, $T_g$ est généralement supérieur à la température ambiante.

En pratique, pour vérifier que la condition concernant le module d'Young est satisfaite, on mesure d'une manière connue en elle-même ce module E fonction de la température et on déduit le rapport E(T # $T_g$ - 30°C) I E(T # $T_g$ + 30°C) pour vérifier qu'il est supérieur à 200.

En pratique, E(T # $T_g$ - 30°C) # 3 . 10$^9$ Pa pour la plupart des polymères considérés, du moins lorsqu'ils ne sont pas chargés.

E(T # $T_g$ + 30°C) correspond au module élastique au plateau caoutchoutique ; dans ce domaine de température, le module d'Young E s'exprime selon la formule :

$$E \approx 3 \times \rho \times \frac{R \times T}{M_c},$$

où $\rho$ est la masse volumique du polymère (g/m$^3$), T est la température en degrés Kelvin, R vaut 8,31 J/°K/ mole et $M_c$ est la masse moléculaire moyenne du polymère entre noeuds du réseau réticulé.

Si $M_n$ est la masse moléculaire moyenne des molécules du polymère, si f est la fonctionnalité du polymère exprimée par le nombre moyen de groupes réactifs par molécule, on a généralement $M_n/M_c$ = f-1.

Ainsi, pour $T_g$ # 60°C, la condition E(T # $T_g$ - 30°C) / E(T # $T_g$ + 30°C) s'exprime sous la forme $M_c$ > 600 g/mole environ.

Dans le cas de résines réticulables à faible fonctionnalité (f = 2), il convient donc de sélectionner un mélange d'imprégnation conduisant à une masse moléculaire moyenne ($M_n$ = $M_c$) supérieure à 600 g/mole.

Pour une résine de masse moléculaire $M_n$ donnée, il est nécessaire d'associer un durcisseur présentant une fonctionnalité d'autant plus faible que celle de la résine est élevée.

Dans le cas d'un réseau réticulé trop dense, le niveau de déformabilité devient insuffisant pour conserver de bonne capacités de formage de l'âme par le procédé selon l'invention.

Selon une variante préférentielle de l'invention, on utilise des moyens d'extrusion pour imprégner la ou les bandes, le mélange d'imprégnation étant alors porté à une température d'imprégnation $T_i$ supérieure à $T_f$ mais inférieure à $T_d$ pour être extrudé (directement ou indirectement) sur la bande à imprégner.

Les moyens d'extrusion qu'on utilise sont connus en eux-mêmes dans d'autres applications très différentes, par exemple pour préparer des films plastiques.

De préférence, le mélange d'imprégnation comprend au moins un polyol d'une part et au moins un isocyanate comme durcisseur d'autre part, et est adapté pour former un polymère de type polyuréthanne après réticulation ou cuisson.

Comme polyol, on utilise de préférence des polyols polyesters, ou polyesters à terminaisons hydroxylées.

L'au moins un isocyanate est de préférence choisi parmi les toluène diisocyanates (TDI), les hexaméthylène diisocyanates (HDI), les isophorone diisocyanates (IPDI), les tétraméthyl-m-xylidène diisocyanates (TMXDI), les isopropényldiméthylbenzylisocyanates (TMI) ou le bis(4-isocyanatocylclohexyl)méthane (H$_{12}$MDI).

On obtient le blocage de la réticulation jusqu'à la température $T_d$, soit par des agents de blocage incorporés au mélange d'imprégnation, soit en choisissant des isocyanates dits "autobloqués", par exemple des isocyanates dimérisés.

Comme agent de blocage, on peut choisir, selon la nature du ou des isocyanates du mélange, par exemple un phénol, un oxime, comme le méthyléthylketoxime, un triazole, comme le benzotriazole, un caprolactame, comme le $\varepsilon$-caprolactame, un composé $\beta$-dicarbolyl, comme l'acétoacétate d'éthyle ou le malonate d'éthyle.

De préférence, on choisit un mélange d'imprégnation comprenant des isocyanates autobloqués et ne contenant pas d'agents de blocage.

Comme exemple d'isocyanate autobloqué de la famille des IPDI, on peut citer l'urétidione de l'IPDI.

De préférence, si on appelle $F_{ol.moy.}$ le nombre moyen de radicaux hydroxylés -OH par molécule de polyol et $F_{iso.moy.}$ le nombre moyen de radicaux -NCO par molécule d'isocyanate, on choisit de préférence l'au moins un polyol et l'au moins un isocyanate de manière que : $F_{ol.moy.} \leq 6$, $F_{iso.moy.} \leq 6$ et $(F_{ol.moy.} + F_{iso.moy.})/2 \leq 4$.

A l'aide des moyens d'imprégnation, on imprègne une face d'une première bande textile par ledit mélange thermodurcissable, puis on applique la deuxième bande textile sur la face imprégnée de la première bande de manière à imprégner la deuxième bande textile, à coller et à solidariser les deux bandes.

Pour appliquer et assembler ainsi les deux bandes textiles, on utilise de préférence des moyens de calandrage dotés de cylindres de calandrage portés à une température adaptée pour le collage des deux bandes et inférieure à la température $T_d$.

Pour améliorer le collage, on peut également calandrer en chauffant le mélange d'imprégnation à une température $T'_i$, comprise entre $T_f$ et $T_d$ de manière à porter le mélange d'imprégnation à l'état liquide et/ou visqueux.

Ce chauffage au moment du calandrage est particulièrement important lorsqu'on a imprégné par poudrage, car il permet de bien fixer le mélange d'imprégnation au sein de la nappe, et donc de manipuler (et de stocker) ensuite la nappe en conservant, en toutes zones de la nappe, la charge d'imprégnation initiale.

Lorsqu'on applique, sur la première bande textile, le mélange d'imprégnation à l'état solide, par exemple par poudrage, ou à l'état dissout, par exemple par enduction, on peut ne fondre le mélange d'imprégnation (à la température $T'_i$) qu'au moment du calandrage des deux bandes textiles.

Avantageusement, comme la température de fusion $T_f$ est relativement basse par rapport à la température de déblocage $T_d$ (cas où $(T_d-T_f) > 30°C$ ), on peut procéder facilement à l'imprégnation de la bande textile (ou au calandrage chauffant) sans contrôle trop précis de la température d'imprégnation ($T_i$ et/ou $T'_i$, du moment qu'elle reste comprise entre $T_f$ et $T_d$).

On peut ensuite enrouler la nappe souple préimprégnée ainsi obtenue et avantageusement la stocker à température ambiante aussi longtemps que souhaité, avant de l'utiliser pour fabriquer des âmes de panneaux.

Les moyens d'extrusion sont donc ici utilisables pour imprégner la bande grâce aux caractéristiques spécifiques du mélange d'imprégnation (système bloqué) et permettent d'obtenir économiquement des nappes préimprégnées avec les avantages de la voie "sèche" (charges d'imprégnation différenciées).

Sans se départir de l'invention, par un procédé analogue, on peut réaliser des nappes à partir d'autres bandes souples que des bandes textiles, ou des nappes stratifiées constituées de plus de deux bandes textiles superposées, ou des nappes non stratifiées à partir d'une seule bande souple.

Dans le cas de nappes non stratifiées (une seule bande souple), l'étape de calandrage n'est pas forcément utile lorsqu'on imprègne pas par poudrage.

Ensuite, pour fabriquer des âmes de panneau composite à partir de la nappe souple obtenue, selon l'invention :

- on cuit ladite nappe à une température $T_c$ dite de cuisson supérieure à $T_d$ et pendant une durée adaptées pour obtenir une réticulation quasiment complète du mélange d'imprégnation de la nappe,

- et, pour lui donner la forme rigide tridimensionnelle qui convient pour servir d'âme audit panneau composite, on moule ensuite ladite nappe au contact de moyens de moulage portés à une température de moulage $T_m$ inférieure à $T_g$, ladite nappe étant à une température $T_r$ supérieure à $T_g$ lorsqu'elle rentre au contact desdits moyens de moulage.

L'installation pour la fabrication de l'âme comprend alors des moyens de cuisson, des moyens de moulage (ou moule) et des moyens pour faire défiler la nappe successivement dans les moyens de cuisson puis dans les moyens de moulage.

Comme moyens de cuisson, on peut utiliser par exemple un four tunnel.

Comme moyens de moulage, on peut utiliser un dispositif comprenant deux cylindres superposés dont la surface présente les motifs à mouler sur la nappe et qui sont adaptés pour imprimer ces motifs sur la nappe lorsqu'on la fait défiler entre les deux cylindres.

Ainsi, la température de rentrée dans le moule $T_r$ peut être égale ou supérieure à $T_g$ + 50°C.

De même, la température du moule lui-même est par exemple maintenue à la température $T_m$ # $T_g$ - 30°C.

De cette manière, en sortant de la cuisson, la nappe, qui se refroidit, est suffisamment souple pour être moulée puisqu'elle rentre dans le moule à une température $T_r$ supérieure à $T_g$, et en ressort suffisamment rigide avec une bonne stabilité dimensionnelle puisqu'elle prend la température du moule $T_m$ inférieure à $T_g$.

Une telle configuration permet aussi d'éviter les risques de retrait au démoulage et d'éviter les risques de collage de la nappe au moule.

On assure de préférence un transfert rapide des nappes entre les moyens de cuisson et les moyens de moulage, de sorte que la température des nappes, au moment où elles pénètrent dans les moyens de moulage, dépasse encore $T_g$, sans chauffage supplémentaire au niveau du moulage.

Avantageusement, on dimensionne et on pilote indépendamment les moyens de cuisson et les moyens de moulage : les moyens de cuisson en fonction du mélange d'imprégnation à réticuler, les moyens de moulage en fonction du type d'âme souhaité.

Ce procédé de fabrication d'âme de panneau composite, en deux étapes séparées de cuisson et de moulage, est ainsi particulièrement productif et souple d'exploitation.

Les critères définissant le mélange d'imprégnation ($T_g$, module d'Young, ou critères spécifiques aux mélanges polyuréthannes) apportent, après cuisson, une densité de réticulation suffisamment faible pour autoriser et faciliter une mise en forme après cuisson, ce qui est un avantage essentiel de cette variante principale de l'invention.

Lorsqu'on choisit une composition polyuréthanne sans agent de blocage (donc avec isocyanates autobloqués), on limite avantageusement les émanations de composés volatils à la cuisson (les agents de blocage étant souvent des composés volatils).

Selon une variante de l'invention, on peut fabriquer les âmes en continu en faisant défiler des nappes imprégnées continues dans l'installation, les âmes rigides et formées n'étant alors découpées qu'en sortie de l'installation.

On améliore ainsi sensiblement la productivité de fabrication d'âmes pour panneaux sandwich.

Les âmes rigides et formées obtenues par le procédé selon l'invention peuvent être utilisées d'une manière classique pour la fabrication de panneaux composites, notamment de panneaux sandwich.

Selon une variante de l'invention, on peut poursuivre la fabrication en continu jusqu'au stade même du panneau.

Selon cette variante, directement en sortie des moyens de moulage, on déroule et on colle en continu, sur au moins une face de l'âme continue, une bande de matériau, notamment une bande d'acier, destinée à former le parement des panneaux, puis on découpe aux dimensions requises l'assemblage collé ainsi réalisé.

On améliore ainsi encore sensiblement la productivité de fabrication de panneaux composites.

L'exemple suivant illustre l'invention.

Exemple :

Cet exemple a pour but d'illustrer un mélange d'imprégnation qui peut être utilisé pour mettre en oeuvre l'invention.

La formulation du mélange d'imprégnation est réalisée comme suit :

- 85% en poids d'un polyol dénommé URALAC P1460 de la Société DSM Resins (Pays Bas) présentant les caractéristiques suivantes :

  - Nombre moyen de -OH par molécule : $F_{ol.moy.}$ = 3.
  - Indice d'hydroxyle du polyol $I_{OH}$ = 37 à 47.
  - Masse molaire moyenne (en masse) $M_w$ = 20000 g/mole.
  - Masse molaire moyenne (en nombre de molécule) $M_n$ = 4090
  - Indice de polydispersité $M_w/M_n$: $I_P$ = 4,9

    (L'indice d'hydroxyle du polyol $I_{OH}$ étant défini comme la quantité nécessaire de potasse - en mg - pour neutraliser toutes les fonctions hydroxyle ; on a donc : $F_{ol.moy.} = I_{OH} \times M_n/56100$)

- comme durcisseur, 15% en masse d'isocyanate dénommé VESTAGON BF 1540 de la Société HÜLS, constitué essentiellement d'urétidione d'IPDI.

  - Nombre moyen de -NCO par molécule : $F_{iso.moy.}$ = 2.
  - Température de fusion comprise entre 105°C et 115°C.
  - Température de déblocage de réticulation $T_d$ = 160°C.
  - quantité totale de radicaux NCO = 14,7 à 16% massique.
  - proportion radicaux NCO libres (non bloqués) < 1 % massique.

Ce mélange d'imprégnation est entièrement à l'état fondu et/ou visqueux à partir de la température $T_f$ = 120°C.

Pour la préparation de nappes imprégnées selon l'invention, on peut donc facilement procéder à l'imprégnation par ce mélange à l'état liquide et/ou visqueux, à une température restant comprise entre $T_f$ et $T_d$.

Les nappes ainsi imprégnées peuvent être stockées à température ambiante sans risque de dégradation.

Les propriétés mécaniques du polymère d'imprégnation sont évaluées comme suit.

Après cuisson du mélange d'imprégnation à une température de cuisson $T_c$ = 180°C (supérieure à $T_d$) pendant 30 minutes, on mesure la température de transition vitreuse $T_g$ = 80°C et le module d'Young du polymère obtenu ; on constate que, entre l'état vitreux et l'état caoutchoutique, le module d'Young chute d'un facteur 828.

Grâce à ses propriétés mécaniques, la nappe imprégnée de ce polymère reste facilement formable, même après cuisson, conformément au procédé de préparation d'âme selon l'invention.

Pour préparer des âmes à partir de nappes imprégnées de ce mélange d'imprégnation :

- on cuit les nappes par exemple à $T_c$ = 230°C pendant environ 1 minute.
  ($T_c$ reste inférieur à la température de dégradation, ici 250°C).
- puis, on transfère rapidement la nappe cuite vers un moule maintenu à une température $T_m$ = 60°C (inférieure à $T_g$), de telle sorte que la nappe rentre dans le moule à une température $T_r$ encore supérieure à $T_g$.
- on maintient la nappe cuite dans le moule pendant environ 15 secondes et on la sort du moule.

Quand on sort la nappe du moule, sa température est alors inférieure à $T_g$.

La nappe obtenue, prête à servir d'âme, est alors suffisamment rigide pour présenter une bonne stabilité dimensionnelle ; on évite aussi des retraits au démoulage.

Par rapport aux procédés classiques de préparation d'âme à partir de nappes préimprégnées, on a multiplié par quatre la productivité du moulage : en effet, en réalisant la cuisson dans le moule, il aurait fallu y maintenir la nappe pendant environ 1 minute (au lieu de 15 secondes).

**Revendications**

1. Procédé de fabrication d'une âme de panneau composite dans lequel :

   - on prépare une nappe souple par imprégnation d'au moins une bande souple, notamment d'étoffe textile, par un mélange d'imprégnation,
   - et on donne ensuite à ladite nappe la forme rigide qui convient pour servir d'âme audit panneau composite,

     **caractérisé en ce que** ledit mélange d'imprégnation est choisi :

   - parmi des mélanges thermodurcissables non réticulés susceptibles de passer à l'état liquide et/ou visqueux au delà d'une température dite de fusion $T_f$ supérieure à la température ambiante et de réticuler de manière quasiment complète au delà d'une température dite de déblocage de réticulation $T_d$ supérieure d'au moins 30°C à $T_f$,

   lesdits mélanges thermodurcissables présentant, après réticulation quasiment complète à une température de cuisson $T_c$ supérieure à $T_d$:

   - d'une part, une température de transition vitreuse $T_g$ inférieure à $T_c$,
   - et, d'autre part, au dessus de cette température $T_g$, une valeur de module d'Young inférieure d'au moins un facteur 200 par rapport à la valeur du module d'Young du même mélange réticulé mesurée en dessous de cette température $T_g$,

   et **caractérisé en ce qu'**on met en forme et on rigidifie ladite nappe souple selon les étapes suivantes :

   - on cuit ladite nappe dans des conditions adaptées pour obtenir une réticulation quasiment complète dudit mélange d'imprégnation à une température de cuisson $T_c$ supérieure à $T_d$,
   - et on moule ensuite ladite nappe cuite au contact de moyens de moulage portés à une température de moulage $T_m$ inférieure à $T_g$, ladite nappe étant à une température supérieure à $T_g$ lorsqu'elle rentre au contact desdits moyens de moulage.

2. Procédé selon la revendication 1 **caractérisé en ce que** ledit mélange d'imprégnation est choisi parmi des mélanges thermodurcissables présentant, après réticulation quasiment complète à une température de cuisson $T_c$ supérieure à $T_d$, une masse moléculaire moyenne $M_n$ et une fonctionnalité f telles que le rapport Mn/(f-1) est au moins égal à 600 g/mole.

3. Procédé selon la revendication 1 et/ou 2 **caractérisé en ce qu'**on imprègne ladite bande souple par extrusion dudit mélange d'imprégnation porté à l'état liquide et/ou visqueux à une température dite d'imprégnation $T_i$ comprise entre $T_f$ et $T_d$.

4. Procédé selon l'une quelconque des revendications précédentes **caractérisé en ce que** ledit mélange d'imprégnation comprend au moins un polyol d'une part et au moins un isocyanate bloqué comme durcisseur d'autre part, de manière à former un polymère de type polyuréthanne après réticulation.

5. Procédé selon la revendication 4 **caractérisé en ce que** :

   - l'au moins un polyol présente un nombre moyen de radicaux hydroxylés-OH par molécule $F_{ol.moy.}$ inférieur ou égal à 6,
   - l'au moins un isocyanate bloqué présente un nombre moyen de radicaux -NCO par molécule

$F_{iso.moy.}$ inférieur ou égal à 6,

- et l'au moins un polyol et l'au moins un isocyanate bloqué sont choisis de manière à ce que
$(F_{ol.moy.} + F_{iso.moy.})/2 \leq 4$.

6. Procédé selon l'une quelconque des revendications
précédentes **caractérisé en ce que** les étapes de
cuisson et de mise en forme sont mises en oeuvre
en continu pour former une âme en forme de bande
continue.

7. Procédé de fabrication de panneau composite comprenant les étapes suivantes :

- on prépare une âme en forme de bande continue en procédant selon la revendication 6,
- on colle en continu au moins un parement en
forme de bande, notamment une bande d'acier,
sur au moins une face de ladite âme,
- et on découpe l'assemblage ainsi réalisé, formant un panneau, aux dimensions requises
pour l'utilisation dudit panneau.


**Patentansprüche**

1. Fertigungsverfahren für einen Verbundplattenkern,
bei dem man

- eine flexible Bahn durch Imprägnieren mindestens eines flexiblen Bandes insbesondere aus
Textilstoff mit einem Imprägniergemisch herstellt und danach
- der genannten Bahn die steife Form erteilt, die
für den Einsatz als Kern für die genannte Verbundplatte erforderlich ist;

**dadurch gekennzeichnet, dass** das Imprägniergemisch ausgewählt wird aus

- wärmehärtbaren, nicht vernetzten Mischungen, die oberhalb einer Temperatur $T_f$, der sogen. Schmelztemperatur, die höher als die Umgebungstemperatur ist, in den flüssigen und/
oder viskosen Zustand übergehen und oberhalb einer Temperatur $T_d$, der sogen. Vernetzungsauslösetemperatur, die mindestens 30°C
höher als $T_f$ ist, quasivollständig vernetzen,
- wobei die genannten wärmehärtbaren Mischungen nach der quasivollständigen Vernetzung bei einer Warmhärtetemperatur $T_c$, die
höher ist als $T_d$,
- einerseits eine Glasübergangstemperatur $T_g$,
die niedriger ist als $T_c$, und
- andererseits oberhalb dieser Temperatur $T_g$ ein
Young'sches Modul aufweist, das um einen
Faktor von mindestens 200 gegenüber dem
Wert des Young'schen Moduls Elastizitätsmoduls des gleichen vernetzten Gemischs niedriger ist, der unterhalb der Temperatur $T_g$ gemessen wurde, und weiterhin **dadurch gekennzeichnet, dass** man in folgenden Schritten der
genannten flexiblen Bahn Gestalt erteilt und sie
versteift:

- man härtet die Bahn warm unter Bedingungen,
die auf eine quasivollständige Vernetzung des
Imprägniergemischs bei einer Warmhärtetemperatur $T_c$ oberhalb $T_d$ gerichtet sind, und
- formt danach die warm gehärtete Bahn im Kontakt mit Formgebungseinrichtungen, die man
auf einer Formgebungstemperatur $T_m$ unterhalb $T_g$ hält, wobei die genannte Bahn beim
erstmaligen Berühren der Formgebungseinrichtungen eine Temperatur höher als $T_g$ hat.

2. Verfahren nach Anspruch 1, **dadurch gekennzeichnet, dass** das genannte Imprägniergemisch
unter den wärmehärtbaren Mischungen ausgewählt wird, die nach der quasivollständigen Vernetzung bei einer Warmhärtetemperatur $T_c$ oberhalb
$T_d$ eine mittlere molekulare Masse $M_n$ und eine
Funktionalität f aufweisen derart, dass das Verhält-
nis $M_n/(f-1)$ mindestens 600 g/Mol beträgt.

3. Verfahren nach Anspruch 1 und/oder 2, **dadurch
gekennzeichnet, dass** man die flexible Bahn
durch Extrudieren des Imprägniergemischs, dem
der flüssige und/oder viskose Zustand erteilt wurde,
bei einer Imprägniertemperatur $T_i$ imprägniert, die
zwischen $T_f$ und $T_d$ liegt.

4. Verfahren nach einem der vorgehenden Ansprüche, **dadurch gekennzeichnet, dass** das Imprägniergemisch einerseits mindestens ein Polyol und
andererseits mindestens ein blockiertes Isocyanat
als Härter aufweist derart, dass nach der Vernetzung ein Polymerisat des Polyurethan-Typs gebildet wird.

5. Verfahren nach Anspruch 4, **dadurch gekennzeichnet, dass**

- das mindestens eine Polyol pro Molekül eine
mittlere Anzahl $F_{ol.moy.}$ Hydroxylradikalen -OH
aufweist, die gleich oder kleiner ist als 6,
- das mindestens eine blockierte Isocyanat pro
Molekül eine mittlere Anzahl $F_{iso.moy.}$ von
-NCO-Radikalen aufweist, die gleich oder kleiner ist als 6, und dass
- das mindestens eine Polyol und das mindestens eine blockierte Isocyanat so gewählt
sind, dass $(F_{ol.moy.} - F_{iso.moy.})/2 \leq 4$ gilt.

6. Verfahren nach einem der vorgehenden Ansprüche, **dadurch gekennzeichnet, dass** die Schritte der Warmhärtung und der Formgebung kontinuierlich ausgeführt werden, um einen Kern als durchgehende Bahn auszubilden.

7. Verfahren zum Herstellen einer Verbundplatte mit folgenden Schritten:

- Herstellen eines Kerns in Form einer kontinuierlichen Bahn nach dem Verfahren des Anspruchs 6 und
- kontinuierliches Aufkleben eines Belags in Bahnform - insbesondere ein Stahlband - auf mindestens eine Seite des Kerns und
- Zerschneiden der so erhaltenen Anordnung zu Platten mit für den Einsatz derselben erforderlichen Abmessungen.

**Claims**

1. Process for manufacturing the core of a composite panel, in which:

   - a flexible web is prepared by impregnating at least one flexible sheet, especially a textile fabric, with an impregnation compound,
   - and the said sheet is then given the rigid shape suitable for serving as the core of the said composite panel,

   **characterized in that** the said impregnation compound is chosen from

   - uncrosslinked thermosetting compounds capable of passing into the liquid and/or viscous state beyond a temperature called the melting point $T_m$ greater than room temperature and of almost completely crosslinking beyond a temperature called the crosslinking unlocking temperature $T_u$ at at least 30°C greater than $T_m$,
   - the said thermosetting compounds having, after almost complete crosslinking at a cure temperature $T_c$ greater than $T_u$:

      - on the one hand, a glass transition temperature $T_g$ less than $T_c$; and
      - on the other hand, above this temperature $T_g$, a Young's modulus at least a factor of 200 times less than the Young's modulus of the same crosslinked compound measured below this temperature $T_g$; and

   **characterized in that** the said flexible web is formed and stiffened according to the following steps:

   - the said web is cured under conditions suitable for obtaining almost complete crosslinking of the said impregnation compound at a cure temperature $T_c$ greater than $T_u$; and
   - said cured web is then moulded in contact with moulding means raised to a moulding temperature $T_{mould}$ less than $T_g$, the said web being at a temperature greater than $T_g$ when it comes into contact with the said moulding means.

2. Process according to Claim 1, **characterized in that** the said impregnation compound is chosen from thermosetting compounds having, after almost complete crosslinking at a cure temperature $T_c$ greater than $T_u$, an average molecular mass $M_n$ and a functionality f which are such that the $M_n/(f-1)$ ratio is at least equal to 600 g/mol.

3. Process according to Claim 1 and/or 2, **characterized in that** the said flexible sheet is impregnated by extruding the said impregnation compound raised to the liquid and/or viscous state at a temperature called the impregnation temperature $T_i$ of between $T_m$ and $T_u$.

4. Process according to any one of the preceding claims, **characterized in that** the said impregnation compound comprises, on the one hand, at least one polyol and, on the other hand, at least one blocked isocyanate as hardener, so as to form a polyurethane-type polymer after crosslinking.

5. Process according to Claim 4, **characterized in that**:

   - at least one polyol has an average number of -OH hydroxyls radicals per molecule $F_{ol,av.}$ of less than or equal to 6;
   - at least one blocked isocyanate has an average number of -NCO radicals per molecule $F_{iso,av.}$ of less than or equal to 6;
   - at least one polyol and at least one blocked isocyanate are chosen so that $(F_{ol,av.} + F_{iso,av.}/2 \leq 4$.

6. Process according to any one of the preceding claims, **characterized in that** the said curing and forming steps are carried out continuously in order to produce a core in the form of a continuous sheet.

7. Process for manufacturing a composite panel, comprising the following steps:

   - a core in the form of a continuous sheet is prepared by carrying out the process according to Claim 6;
   - at least one facing in the form of sheet, especially a steel sheet, is continuously bonded to at least one side of the said core; and
   - the assembly thus produced is cut up, forming a panel, to the required dimensions for the use of the said panel.